# EUROPÄISCHE PATENTANMELDUNG

(11) **EP 1 420 161 A1**
(43) Veröffentlichungstag der Anmeldung: **19.05.2004**
(21) Anmeldenummer: 02405989.1
(22) Anmeldetag: 18.11.2002
(51) Int. Cl.: F02M 55/00, F16L 23/20, F16J 15/08

(54) **Metallischer Dichtring, sowie ein Druckspeicher für ein Common Rail System mit einem solchen Dichtring**

(71) Anmelder: Wärtsilä Schweiz AG, 8401 Winterthur (CH)
(72) Erfinder: Yildirim, Turhan, 8408 Winterthur (CH)
(74) Vertreter: Sulzer Management AG

(57) **Zusammenfassung**

Der erfindungsgemässe metallische Dichtring (1) mit einer zentralen Bohrung (2) umfasst ein die zentrale Bohrung (2) in Umfangsrichtung begrenzendes Paar von Anpressflächen (3), wobei die Anpressflächen (3) unter einem Anpresswinkel (α) radial in Richtung auf eine Mittelebene (E) des Dichtrings (1) geneigt sind. Dabei weist der Dichtrung (1) eine zumindest zwischen den Anpressflächen (3) in Umfangsrichtung um die Bohrung (2) verlaufende Ausnehmung (4) auf.

## Beschreibung

Die Erfindung betrifft einen metallischen Dichtring sowie einen Druckspeicher für ein Common Rail System einer Hubkolbenbrennkraftmaschine mit einem solchen Dichtring gemäss dem Oberbegriff des unabhängigen Anspruchs der jeweiligen Kategorie.

An Verbindungen zwischen Hochdruckkomponenten, wie beispielsweise an Übergängen zwischen zwei Druckleitungen, an Druckverzweigungsstellen oder zwischen Druckleitungen und Hochdruckkomponenten wie Druckspeichern oder ähnlichem besteht häufig die Aufgabe, auch bei hohen Arbeitsdrücken die Dichtheit des Systems, insbesondere auch bei unkontrollierten Druckschwankungen, sicher zu gewährleisten.

In Common Rail Einspritzsystemen für Brennkraftmaschinen, wie sie beispielweise in Grossdieselmotoren verbreitet im Einsatz sind, fördert eine Hochdruckpumpe den einzuspritzenden Kraftstoff aus einem Vorratstank in einen zentralen Kraftstoffhochdruckspeicher, der als Common Rail bezeichnet wird. Von dem Kraftstoffhochdruckspeicher zweigen entweder direkt Kraftstoffleitungen zu den Einspritzdüsen an den einzelnen Zylindern der Brennkraftmaschine ab oder aber der Kraftstoff wird aus dem Kraftstoffhochdruckspeicher zunächst über einen Verbindungsflansch einer Einrichtung zur Kraftstoffverteilung zugeführt.

Der Kraftstoffhochdruckspeicher weist dabei in einer Wandung eine oder mehrere Durchgangsöffnungen auf, durch die Kraftstoff unter einem hohem Arbeitsdruck, beispielsweise mit 2000 bar oder mehr, in axialer Richtung über eine Dichtverbindung in eine angeschlossene Komponente weitergeleitet wird. Die Verbindungen der Kraftstoffhochdruck führenden Teile sind in der Regel mit einem metallischen Dichtring gedichtet, d.h. die Dichtung wird durch Pressen eines Dichtrings, der zwischen den zu verbindenden Teilen angeordnet ist, erreicht. Dabei wird der Dichtring plastisch verformt und ist somit nicht wiederverwendbar. Darüber hinaus erfordert diese Art der Dichtung einerseits grosse Presskräfte und andererseits, insbesondere bei grossflächigen Teilen, aufwendige Einstellarbeiten, um eine gleichmässige und genügend grosse Flächenpresskraft am Dichtring zu erreichen. Dabei ist die Dichtwirkung des Dichtrings unabhängig vom Arbeitsdruck, d.h. unter anderem, dass einer Erhöhung des Arbeitsdrucks, wie sie beispielsweise durch periodische oder nicht periodische Schwankungen im Arbeitsdruck im Betrieb durchaus vorkommen können, nicht automatisch durch eine Erhöhung der Dichtwirkung des Dichtrings entgegengewirkt werden kann. Das kann dazu führen, dass die Dichtwirkung des Dichtrings mit der Zeit zunehmend nachlässt oder es im Betrieb bei überschreiten eines Grenzdrucks im schlimmsten Fall zu einem spontanen Druckabfall im System kommt.

Die Aufgabe der Erfindung ist es daher, einen verbesserten metallischen Dichtring, insbesondere zur Abdichtung von Verbindungen, die hohen Arbeitsdrücken ausgesetzt sind, vorzuschlagen, der die aus dem Stand der Technik bekannten Nachteile vermeidet.

Die diese Aufgabe lösenden Gegenstände der Erfindung sind durch die Merkmale des unabhängigen Anspruchs der jeweiligen Kategorie gekennzeichnet.

Die jeweiligen abhängigen Ansprüche beziehen sich auf besonders vorteilhafte Ausführungsformen der Erfindung.

Der erfindungsgemässe metallische Dichtring mit einer zentralen Bohrung umfasst ein die zentrale Bohrung in Umfangsrichtung begrenzendes Paar von Anpressflächen, wobei die Anpressflächen unter einem Anpresswinkel radial in Richtung auf eine Mittelebene des Dichtrings geneigt sind. Dabei weist der Dichtring eine zumindest zwischen den Anpressflächen in Umfangsrichtung um die Bohrung verlaufende Ausnehmung auf.

Der erfindungsgemässe metallische Dichtring weist in einem Dichtkörper eine zentrale Bohrung auf, durch die im Betriebszustand ein unter hohem Druck stehendes Fluid, beispielsweise ein unter hohem Druck stehender Kraftstoff bei einem Common Rail System, durchströmen kann. Dabei weist der Dichtkörper ein die zentrale Bohrung in Umfangsrichtung begrenzendes Paar von im wesentlichen ebenen Anpressflächen auf, die bevorzugt, jedoch nicht notwendig, spiegelsymmetrisch zu einer Mittelebene des Dichtrings angeordnet sind und den Dichtring so nach aussen begrenzen, dass jede Anpressfläche im Einbauzustand an eine Druckaufnahmefläche von zwei druckdicht zu verbindenden Elementen anpressbar ist. Die Anpressflächen sind dabei unter einem vorgegeben Anpresswinkel radial nach aussen in Richtung auf die Mittelebene geneigt, wobei der Anpresswinkel beispielsweise einen Wert von kleiner als zwei Grad, bevorzugt kleiner als ein Grad aufweist.

Die zentrale Bohrung ist dabei im Querschnitt bevorzugt kreisförmig ausgeführt, kann jedoch in speziellen Fällen im Querschnitt auch oval, in Form eines Polygons oder anders ausgeführt sein.

Weiter weist der Dichtring im Dichtkörper eine zumindest im Bereich zwischen den Anpressflächen in Umfangsrichtung um die Bohrung verlaufende Ausnehmung auf, so dass sich der Dichtring durch ein Paar von Anpresslippen auszeichnet, die nach aussen von den Anpressflächen begrenzt werden. Dabei ist der durch die Ausnehmung gebildete Hohlraum zur zentralen Bohrung hin offen, so dass im Einbauzustand des Dichtrings das im Betriebszustand unter hohem Arbeitsdruck, beispielsweise unter mehr als 1000 bar, im speziellen auch unter mehr als 2000 bar stehende Fluid ungehindert in die Ausnehmung eintreten und das Paar von Anpresslippen und somit die Anpressflächen derart mit dem Arbeitsdruck beaufschlagbar ist, dass die Anpressflächen vom Arbeitsdruck dichtend gegen die Druckaufnahmeflächen der druckdicht zu verbindenden Elementen angepresst werden.

Dadurch, dass die Anpressflächen des Dichtrings mit Arbeitsdruck beaufschlagbar sind, wird die Dichtwirkung des Dichtrings im Betrieb mit steigendem Arbeitsdruck automatisch erhöht. Weil die Anpressflächen unter einem (kleinen) Winkel in Richtung auf die Mittelebene geneigt sind, wird bei einem gegebenen Arbeitsdruck nur ein gewisser Teil der gesamten Anpressfläche an die korrespondierende Druckaufnahmefläche angepresst. Ein weiter aussen liegender Bereich, d.h. ein von der zentralen Bohrung weiter beabstandeter Bereich der Anpressfläche, steht nicht in direktem Kontakt zur Druckaufnahmefläche. Vielmehr nimmt in diesem Bereich mit zunehmendem Abstand von der zentralen Bohrung, der Abstand der Anpressfläche von der entsprechenden Druckaufnahmefläche nach aussen stetig zu. Dadurch wird mit steigendem Arbeitsdruck nicht nur die Anpresskraft der Anpressfläche an die Druckaufnahmefläche erhöht, sondern es vergrössert sich auch effektiv der Anteil der Anpressfläche, der dichtend mit der Druckaufnahmefläche zusammenwirkt, da mit steigendem Arbeitsdruck zunehmend auch weiter von der zentralen Bohrung beabstandete Teile der Anpressflächen an die Druckaufnahmeflächen angepresst werden.

Das heisst, die Dichtwirkung des Dichtrings ist in bestimmten Grenzen abhängig vom Arbeitsdruck, d.h. beispielsweise, dass periodische oder nicht periodische Schwankungen im Arbeitsdruck, wie sie im Betriebszustand durchaus vorkommen können, automatisch durch eine Erhöhung der Dichtwirkung des Dichtrings entgegengewirkt wird. Dadurch kann zumindest unterhalb eines Grenzdrucks verhindert werden, dass durch spontane Steigerungen im Arbeitsdruck das Fluid zwischen eine Anpressfläche und die entsprechende Druckaufnahmefläche gelangt, so dass mit der Zeit das Material des metallischen Dichtrings ermüdet, wodurch die Dichtwirkung des Dichtrings mit der Zeit zunehmend nachlässt. Insbesondere kann durch den Einsatz des erfindungsgemässen Dichtrings verhindert werden, dass es durch eine spontane Steigerung des Arbeitsdrucks zu einem unkontrollierten Druckabfall im System kommt.

Bei einem bevorzugten Ausführungsbeispiel eines erfindungsgemässen metallischen Dichtrings schliesst sich an jede Anpressfläche eine Aussenfläche an, wobei die Aussenfläche unter einem vorgegebenen Neigungswinkel radial in Richtung auf die Mittelebene des Dichtrings geneigt ist. Bevorzugt ist der Neigungswinkel der Aussenflächen grösser als der Anpresswinkel der Anpressfläche. Der Neigungswinkel beträgt vorzugsweise weniger als 15°, im besonderen weniger als 10° und im speziellen ist der Neigungswinkel kleiner oder gleich 6°. Dabei kann sich die Ausnehmung auch bis zwischen die Aussenflächen erstrecken.

Bevorzugt ist der metallische Dichtring elastisch verformbar ausgestaltet, wodurch der Dichtring wiederverwendbar ist. Dabei ist der Dichtring so ausgestaltet und im Einbauzustand angeordnet, dass die Anpressflächen zumindest teilweise in axialer Richtung unter einer mechanischen Vorspannung stehen. Dadurch werden die Anpressflächen auch ohne Beaufschlagung mit dem Arbeitsdruck des Fluis mit einer vorgebbaren Presskraft an die Druckaufnahmeflächen dichtend angepresst, so dass auch bei geringem Arbeitsdruck bereits eine ausreichende Dichtwirkung erzielt wird, so dass das Fluid nicht zwischen Anpressfläche und Druckaufnahmefläche gelangen kann, wodurch die Dichtwirkung des Dichtrings im wesentlichen aufgehoben würde.

Die Erfindung betrifft weiter einen Druckspeicher für ein Common Rail System einer Hubkolbenbrennkraftmaschine, insbesondere für einen Grossdielmotor, mit einem erfindungsgemässen Dichtring, wobei der Dichtring bevorzugt in einer Ausnehmung in der Wandung des Druckspeichers angeordnet ist.

Die Erfindung wird im folgenden an Hand der Zeichnung näher erläutert. Es zeigen in schematischer Darstellung:
- Fig. 1: einen erfindungsgemässen Dichtring;
- Fig. 2: einen Dichtring gemäss Fig. 1 im Einbauzustand;
- Fig. 3: einen elastisch verformbaren Dichtring.

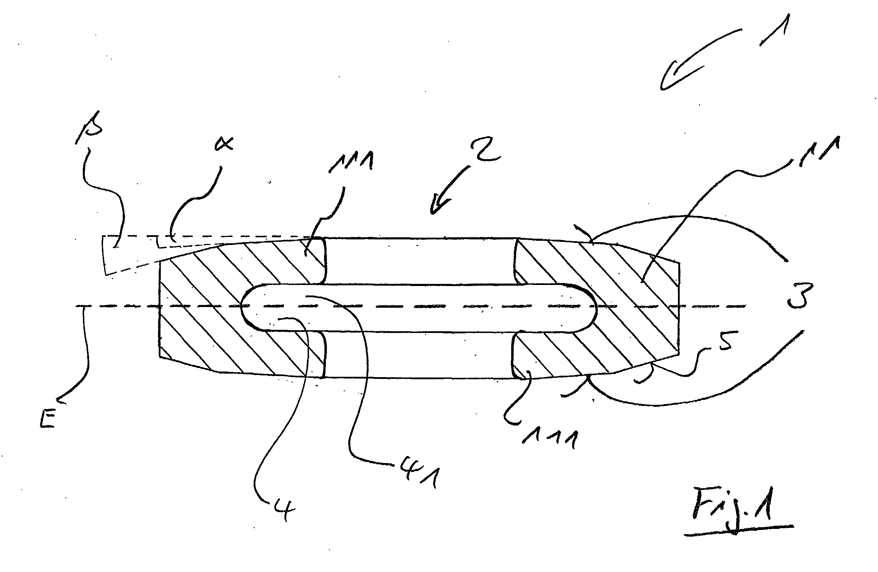

Fig. 1 zeigt in einer schematischen Darstellung einen erfindungsgemässen Dichtring der im folgenden gesamthaft mit dem Bezugszeichen 1 bezeichnet wird. Der Dichtring 1 besteht aus Metall und weist eine zentrale Bohrung 2 auf, die in Umfangsrichtung von einem Paar Anpressflächen 3, bevorzugt kreisförmig, begrenzt wird, wobei die Anpressflächen 3 unter einem Anpresswinkel α radial nach aussen in Richtung auf eine Mittelebene E des Dichtrings 1 geneigt sind und der Anpresswinkel α beispielsweise einen Wert von kleiner als zwei Grad, bevorzugt kleiner als ein Grad aufweist. Dabei weist der Dichtring 1 eine zwischen den Anpressflächen 3 in Umfangsrichtung um die Bohrung 2 verlaufende Ausnehmung 4 auf.

Die Anpressflächen 3 sind im wesentlichen eben ausgestaltet und sind, wie hier beispielhaft dargestellt, spiegelsymmetrisch zur Mittelebene E des Dichtrings 1 angeordnet, so dass sie im Einbauzustand an eine, in Fig. 1 nicht gezeigte, Druckaufnahmefläche 61, 71 von zwei ebenfalls in Fig. 1 nicht gezeigten druckdicht zu verbindenden Elementen 6, 7 anpressbar sind.

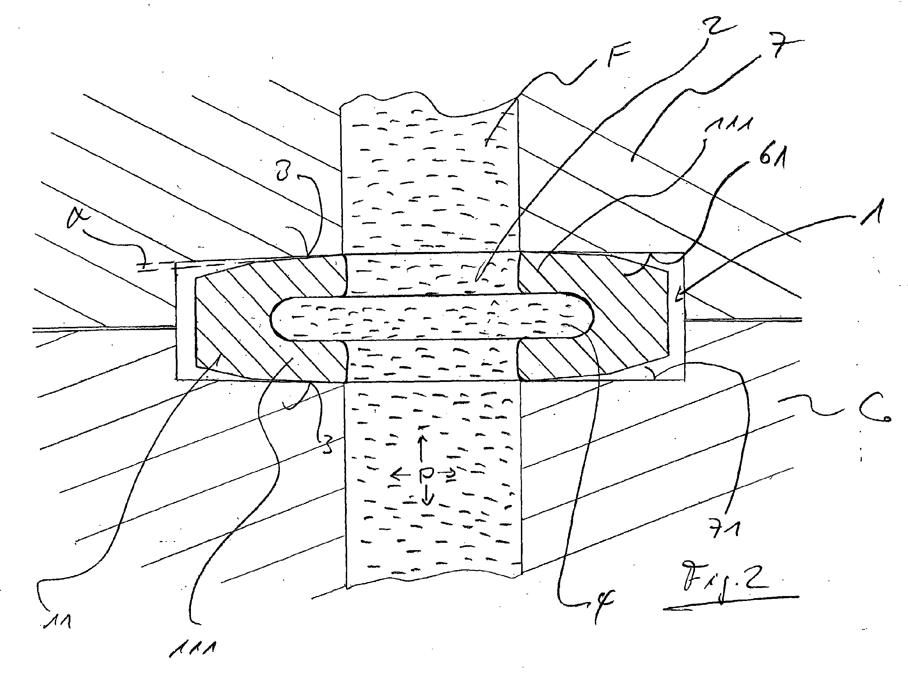

Durch die im Bereich zwischen den Anpressflächen 3 in Umfangsrichtung um die Bohrung 2 verlaufende Ausnehmung 4, ist an dem erfindungsgemässen Dichtring 1 ein Paar von Anpresslippen 111 ausgebildet, die nach aussen von den Anpressflächen 3 begrenzt werden. Dabei ist der durch die Ausnehmung 4 gebildete Hohlraum 41 zur zentralen Bohrung 2 hin offen, so dass im Einbauzustand des Dichtrings 1 ein unter einem Arbeitsdruck P stehendes Fluid F (siehe Fig. 2) in die Ausnehmung 4 ungehindert eintreten kann.

Bei dem hier dargestellten bevorzugten Ausführungsbeispiel eines erfindungsgemässen metallischen Dichtrings 1 schliesst sich an jede Anpressfläche 3 eine Aussenfläche 5 an, wobei die Aussenfläche 5 unter einem vorgegebenen Neigungswinkel β radial in Richtung auf die Mittelebene E des Dichtrings 1 geneigt ist. Bevorzugt ist der Neigungswinkel β der Aussenfläche 5 grösser als der Anpresswinkel α der Anpressflächen 3. Der Neigungswinkel β beträgt vorzugsweise weniger als 15°, im besonderen weniger als 10° und im speziellen ist der Neigungswinkel kleiner oder gleich 6°. Dabei kann sich bei einem anderen Ausführungssbeispiel, anders als in Fig. 1 gezeigt, die Ausnehmung 4 auch bis zwischen die Aussenflächen 5 erstrecken.

Fig. 2 zeigt ein Ausführungsbeispiel eines erfindungsgemässen Dichtrings 1 im Einbauzustand. Der Dichtring 1 weist im Dichtkörper 11 eine zentrale Bohrung 2 auf, durch die im Betriebszustand das unter hohem Arbeitsdruck P, beispielsweise unter einem Arbeitsdruck von mehr als 2000 bar stehende Fluid F, wie etwa ein unter hohem Arbeitsdruck P stehender Kraftstoff bei einem Common Rail System, durchströmen kann. Das Fluid F kann ungehindert in die Ausnehmung 4 zwischen die Anpresslippen 111 eintreten wodurch die Anpressflächen 3 derart mit dem Arbeitsdruck P, der wie durch die Pfeile in Fig. 2 angedeutet im Fluid F natürlich allseitig wirkt, beaufschlagbar sind, dass die Anpressflächen 3 vom Arbeitsdruck P dichtend gegen die Druckaufnahmeflächen 61, 71 der druckdicht zu verbindenden Elemente 6, 7 angepresst werden.

Dadurch, dass die Anpressflächen 3 des Dichtrings 1 mit Arbeitsdruck P beaufschlagbar sind, wird die Dichtwirkung des Dichtrings 1 im Betrieb mit steigendem Arbeitsdruck P automatisch erhöht. Weil die Anpressflächen 3 unter einem (kleinen) Winkel α in Richtung auf die Mittelebene E geneigt sind, wird bei einem gegebenen Arbeitsdruck P nur ein gewisser Teil der gesamten Anpressfläche 3 an die korrespondierende Druckaufnahmefläche 61, 71 angepresst. Ein weiter aussen liegender Bereich, d.h. ein von der zentralen Bohrung 2 weiter beabstandeter Bereich der Anpressfläche 3, steht, wie in Fig. 2 dargestellt, nicht in direktem Kontakt zur Druckaufnahmefläche 61, 71. Vielmehr nimmt in diesem Bereich mit zunehmendem Abstand von der zentralen Bohrung 2 der Abstand der Anpressfläche 3 von der entsprechenden Druckaufnahmefläche 61, 71 bei gegebenem Arbeitsdruck P nach aussen stetig zu, so dass im Betriebszustand mit steigendem Arbeitsdruck P der Anteil der Anpressfläche 3, der dichtend mit der Druckaufnahmefläche 61, 71 zusammenwirkt, mit zunehmendem Arbeitsdruck P vergrösserbar ist.

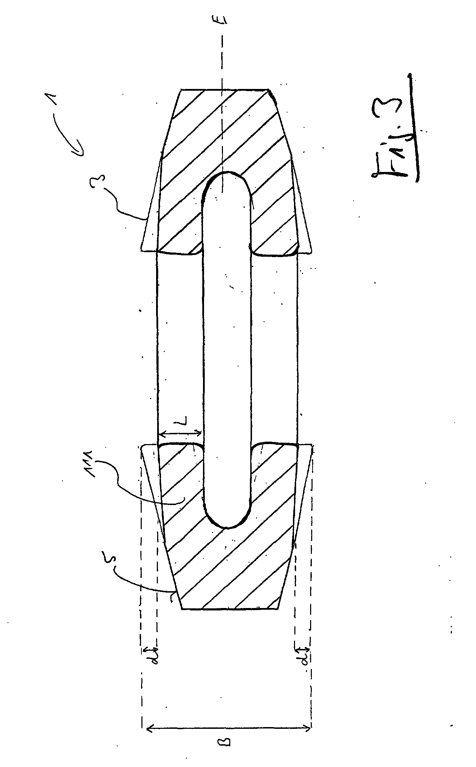

Wie in Fig. 3 schematisch dargestellt, ist der metallische Dichtring 1, der im mechanisch unbelasteten Zustand senkrecht zur Mittelebene E, also in axialer Richtung, eine maximale Dicke B aufweist, bevorzugt elastisch verformbar ausgestaltet, wodurch der Dichtring 1 wiederverwendbar ist. Dabei ist der Dichtring 1 so ausgestaltet und im Einbauzustand angeordnet, dass der Abstand der Anpressflächen 3 in axialer Richtung um eine Strecke verkürzt wird, die dem doppelten einer zusammenzupressenden Dicke d entspricht, so dass die Anpresslippen 111 unter einer vorgebbaren mechanischen Vorspannung stehen. Dadurch werden die Anpressflächen 3 auch ohne Beaufschlagung mit dem Arbeitsdruck P des Fluids F mit einer vorgebbaren Presskraft an die in Fig. 3 nicht gezeigten Druckaufnahmeflächen 61, 71 dichtend angepresst, so dass auch bei geringem Arbeitsdruck P bereits eine ausreichende Dichtwirkung erzielt wird, so dass das Fluid nicht zwischen Anpressfläche 3 und Druckaufnahmefläche 61, 71 gelangen kann, wodurch die Dichtwirkung des Dichtrings 1 im wesentlichen aufgehoben würde. Je nach Durchmesser der zu dichtenden Bohrung 2 und je nach maximalem Arbeitsdruck P können die Lippendicke L, die im Einbauzustand zusammenzupressende Dicke d, sowie der Anpresswinkel α unter Einbeziehung des für den Dichtring 1 verwendeten Materials zur Erzielung einer optimalen Dichtwirkung aufeinander abgestimmt werden. Dabei werden die zusammenzupressende Dicke d und der Anpresswinkel α je nach Anwendung bevorzugt so aufeinander abgestimmt, dass sich im Einbauzustand bereits ohne Beaufschlagung mit dem Arbeitsdruck P eine vorgebbare Dichtlänge einstellt, wobei die Dichtlänge bei Beaufschlagung mit dem Arbeitsdruck P mindestens erhalten, bevorzugt noch vergrössert wird.

Durch die Erfindung wird ein wiederverwendbarer metallischer Dichtring für hohe Arbeitsdrücke zur Verfügung gestellt, der sehr flexibel, praktisch unabhängig von der zu verbindenden Bauteilflächengrösse einsetzbar ist. Die Bauteile können ohne Rücksicht auf Deformation der Dichtung miteinander verbunden werden, wobei aufwendige Einstell- und Justierarbeiten bei der Montage des Dichtrings entfallen, und auch auf Stützvorrichtungen für den Dichtring weitestgehend verzichtet werden kann. Die Dichtbreite kann genügend gross gewählt werden, da diese sich aufgrund des anliegenden Arbeitsdrucks automatisch einstellt. Das hat insbesondere zur Folge, dass sich die Dichtwirkung mit steigendem Arbeitsdruck automatisch erhöht, so dass auch spontane Steigerung des Arbeitsdruck aufgefangen werden und es damit nicht zu einem unkontrollierten Druckabfall im System kommen kann.

## Patentansprüche

1. Metallischer Dichtring mit einer zentralen Bohrung (2), einem die zentrale Bohrung (2) in Umfangsrichtung begrenzenden Paar von Anpressflächen (3), wobei die Anpressflächen (3) unter einem Anpresswinkel (α) radial in Richtung auf eine Mittelebene (E) des Dichtrings geneigt sind und der Dichtring eine zumindest zwischen den Anpressflächen (3) in Umfangsrichtung um die Bohrung (2) verlaufende Ausnehmung (4) aufweist.

2. Metallischer Dichtring nach Anspruch 1, bei welchem sich an jede Anpressfläche (3) eine Aussenfläche (5) anschliesst, wobei die Aussenfläche (5) unter einem Neigungswinkel (β) radial in Richtung auf die Mittelebene (E) des Dichtrings geneigt ist.

3. Metallischer Dichtring nach Anspruch 2, wobei sich die Ausnehmung (4) zwischen die Aussenflächen (5) erstreckt.

4. Metallischer Dichtring nach einem der vorangehenden Ansprüche, der elastisch verformbar ausgestaltet ist.

5. Metallischer Dichtring nach einem der vorangehenden Ansprüche, welcher Dichtring so ausgestaltet und im Einbauzustand angeordnet ist, dass die Anpressflächen (3) zumindest teilweise in axialer Richtung unter einer mechanischen Vorspannung stehen.

6. Metallischer Dichtring nach einem der vorangehenden Ansprüche, wobei die Ausnehmung (4) des Dichtrings derart ausgestaltet ist, dass im Betriebszustand durch Beaufschlagung der Ausnehmung (4) mit einem Arbeitsdruck (P) die Dichtwirkung des Dichtrings erhöht wird.

7. Metallischer Dichtring nach einem der vorangehenden Ansprüche, wobei im Einbauzustand eine zusammenzupressende Dicke (d) und der Anpresswinkel (α) so aufeinander abgestimmt sind, dass sich ohne Beaufschlagung mit dem Arbeitsdruck (P) eine vorgebbare Dichtlänge einstellt, wobei die Dichtlänge bei Beaufschlagung mit dem Arbeitsdruck (P) mindestens erhalten, bevorzugt noch vergrössert wird.

8. Druckspeicher für ein Common Rail System einer Hubkolbenbrennkraftmaschine, insbesondere für einen Grossdieselmotor, mit einem Dichtring nach einem der vorangehenden Ansprüche.

9. Druckspeicher nach Anspruch 8, wobei der Dichtring in einer Ausnehmung in der Wandung des Druckspeichers angeordnet ist.
